(19) **Europäisches Patentamt**
**European Patent Office**
**Office européen des brevets**

(11) Publication number: **0 217 626**
**A2**

# (12) EUROPEAN PATENT APPLICATION

(21) Application number: **86307325.0**

(22) Date of filing: **24.09.86**

(51) Int. Cl.⁴: **C 08 K 3/26**
**C 08 K 3/34, C 08 K 3/22**
**H 01 B 7/36**

(30) Priority: **27.09.85 DE 3534441**

(43) Date of publication of application:
**08.04.87 Bulletin 87/15**

(84) Designated Contracting States:
**AT BE CH DE FR GB IT LI LU NL SE**

(71) Applicant: **DSG Schrumpfschlauch GmbH**
**Heidestrasse**
**D-5309 Meckenheim(DE)**

(72) Inventor: **Arenz, Helmut**
**Ahrweg 11**
**D-5305 Alfter-Impekoven(DE)**

(74) Representative: **James, Michael John Gwynne et al,**
**Wynne-Jones, Lainé & James 22, Rodney Road**
**Cheltenham Gloucestershire GL50 1JJ(GB)**

(54) **Improvements relating to heat shrink tubing.**

(57) A heat shrinkable polymeric composition incorporates an inorganic filler. This filler provides a substrate to which a durable ink marking can be applied. The composition can then be used particularly for the production of heat shrink tubing to be used, for example, as cable markers. The filler is preferably selected from chalks, clays, aluminium hydroxide, their hydrated forms and double salts, either alone or in admixture. Other ingredients such as flame retardants and stabilisers may be incorporated in the composition.

"Improvements relating to heat shrink tubing"

This invention is concerned with means for applying durable ink markings onto heat shrink tubing to be used, for example, as cable markers. In one known arrangement heat shrink tubing is fed from a gun incorporating a punching device which impresses suitable markings on the tubing. A desired length of tubing is then cut off, applied to a cable, and heat shrunk into position. It is desired, however, to be able to apply markings to such tubing when attached to a sheet which could be fed into a typewriter so that the tubing is aligned to receive impressions from the typewriter when the keys are struck. With existing types of tubing it is, however, difficult to achieve a suitable imprint on the tubing which is durable and which will not rub off during use.

It is an object of this invention to provide a heat shrink tube which will receive and retain a clear imprint. In particular, it is important that, for ease of marking with a typewriter or other printer, the tube should be readily flattened without premature recovery. Such an application is disclosed in British Patent No. 2071010.

According to the invention there is provided a heat shrinkable polymeric composition incorporating an inorganic filler which provides a substrate to which a durable ink marking can be applied.

The particulate fillers that may be employed in the compositions of the present invention are those which have the ability to absorb marking ink. Particularly important classes of fillers include chalks, clays, and minerals, especially metal salts such as oxides, carbonates, hydroxides and their hydrated forms and double salts. Mixtures of these fillers may also be used if desired. The preferred filler is calcium carbonate, aluminium silicate or other clay with a surface area of at least $1m^2/g$ up to $300m^2/g$ and most preferably having a surface area of from $1m^2/g$ to $100m^2/g$ particularly 2 to $40m^2/g$, and especially 4 to $16m^2/g$, as measured by the BET method. The amount of filler incorporated in the compositions of the invention will naturally depend inter alia on the nature thereof although in general, amounts in the range of 5 to 60%, more preferably 10 to 50%, especially 15 to 40%, or 15 to 60% preferably 40 to 60% based on the weight of the composition are preferred.

It has also been observed that further improvements in mechanical properties, especially in the case of flattening the tube, of the polymer composition can be achieved by coating some of the inorganic filler(s).

As examples of reagents which may be employed to precoat the surface of the filler there may be mentioned acids, both organic and inorganic, and reactive functional acid derivatives, for example stearic acid, esters, and acid halides and anhydrides, and coupling agents such as titanates and silanes or other organo-silicon and titanium derivatives. Under certain circumstances, various desirable properties may be optimised by the use of a plurality of pre-coating reagents. The amount of pre-coating reagent(s) employed preferably lies in the range 0.1 to 15 weight per cent, more preferably 1 to 10 weight per cent based on the weight of the filler.

Polymeric compositions wherein an inorganic filler has been found to enhance the durability of ink markings comprise non-cross-linked and cross-linked thermoplastic or elastomeric substituted or unsubstituted polyakanes or alkene copolymers, such as, alkene/alkene copolymers, vinyl ester homo- or copolymers and (meth)acrylate homo- or copolymers. The term "copolymer" as used herein is employed in a broad sense to mean any polymer containing at least two different monomeric species and includes terpolymers and the like. Unsubstituted polyalkanes and alkene copolymers of interest include polyethylenes and alkene/alkene copolymers such as ethylene/ alkene copolymers. Furthermore, such polymers may be employed as a blend system containing other polymers.

The polymer composition may also contain other additives such as organic halogen containing or inorganic flame retardants, or organo-phosphorous compounds, anti-tracking agents, high voltage erosion suppressants, stabilisers, such as antioxidents and ultra-violet stabilisers, fillers, pigments, colourants and the like. In general, it is preferred that the composition contains little or no halogen, for example less than 15 weight per cent based on the composition, more preferably less than 10 weight per cent, especially less than 5 weight per cent halogen atoms.

For most purposes, it is preferred that the compositions of the invention are substantially cross-linked. The degree of cross-linking of the compositions may be expressed in terms of the gel content (ANSI/ASTM D2765-68) of the cross-linked polymeric composition, namely excluding non-polymeric additives that may be present. Preferably the gel content of the cross-linked composition is at least 10%, more preferably at least 20%, for example at least 30%, or still more preferably at least 40%. When desired the polymeric components of the composition may be cross-linked either by the incorporation of a cross-linking agent or by exposure to high energy radiation.

The compositions of the present invention are also particularly suitable in cross-linked form for the production of dimensionally recoverable articles. Such dimensionally recoverable articles may be employed as marking sleeves for covering and/or sealing splices and terminations in electrical conductors or in utility systems, e.g. gas or water pipes, district heating systems, ventilation and heating ducts and conduits or pipes carrying domestic or industrial effluent.

The marking ink may readily be impressed onto the tube from an inked ribbon by means of a typewriter.

The invention may be performed in various ways and preferred embodiments thereof will now be described with reference to the accompanying examples.

Example 1

A mixture is formed comprising 40% of a polyethylene in powder or granular form, 30% of ethylene vinyl acetate and 30% of powdered chalk as a filler. The mixture is compounded in an internal mixer, heated to a temperature of 150°-180°C, transferred to a two roll mill and then granulated. These pellets are then extruded in tubular form, the tube being irradiated to give a gel content of 40% and expanded.

Subsequently the tube is pressed to form a flattened tube. This flattened tube is applied by a pressure sensitive adhesive to a backing sheet which can be fed around a typewriter platen. When the tube is suitably positioned on the platen coding markings may be applied thereto by operating the keys of the typewriter. The flattened tube is then removed from the backing sheet, cut to a required length, applied over a cable and heated so as to shrink tightly in position over the cable.

Test Method

BS 2G 198 1982 Part 2 "Sleeves for aircraft electric cables and equipment wires. Resistance to fluids according to Table 7, fluids a, b, f and tests to Clause 11.4."

Results

Fluids

(a)  Aircraft Fuel. A mixture of 70%      Pass
      iso-octane and 30% toluene by volume.

(b)  Skydrol 500 B-4 - phosphate ester-    Pass
      based synthetic hydraulic fluid.
      AFS No 1559

(f)  Kilfrost ABC DTD 900/4907 - de-icing  Pass
      fluid.

Example 2

Compositions described in parts per hundred resin (phr) and as set out in Tables 1 and 2 were compounded on a two roll laboratory mill, heated to a temperature of 120-140°C, and moulded at 170°C into test plaques of 0.75mm thickness. The test plaques were then irradiated to a total dosage of 10 Mrads ± 0.5 Mrads. The composition of each formulation employed is set out in Tables 1 and 2 below which show the number of parts of each constituent. In Table 1 the employed resin was a LDPE/EVA blend (LDPE with MFI = 1.9, EVA ≏ 20% VA, with MFI = 2.0).

Sections were cut from the plaque and expanded to twice their original length for all samples in Tables 1 and 2 except for samples A, B, H, K and L in Table 2 which were expanded to 3:1. All samples were then marked in a typewriter using an ink-impregnated textile ribbon, T3 or multi-strike ribbon. Samples were then allowed to recover in an oven at 120°C and tested according to BS 2G 198:1982:Part 2 for immersion in Skydrol 500-B4. This test specifies that marked samples are immersed in Skydrol for 24 hours at 70°C, drained and dried for 12 hours at 70°C, and that the mark shall remain legible after 25 rubs with a soft cloth. Skydrol is well known as the most efficient fluid as specified in Table 7 of BS 2G 198:Part 2 for removing marks. Many samples which failed this test passed other fluids of Table 7, for example aircraft fuel which is a mixture of 70% iso-octane and 30% toluene by volume. For comparison irradiated samples which

**0217626**

had not been expanded were similarly marked and tested for mark retention in Skydrol. In no case was mark retention observed.

The best mark retention was observed with samples A and L in Table 2, however due to the elastomeric character of the base resin this would not necessarily make the best heat recoverable sleeve marker; also due to an apparent interaction during processing between some fillers and the EVA with 40% weight VA this resin base is not always the most suitable. Sample A, in Table 1, at 100 phr calcium carbonate is regarded as the best base formulation for a heat recoverable sleeve with outstanding mark retention properties.

## TABLE 1

| Sample | Surface Area m²/g | Particle Size μm | Coating | 10 | 20 | 50 | 75 | 100 | 125 | 150 |
|---|---|---|---|---|---|---|---|---|---|---|
| A | 9 | <2 | Stearate | | F | P | P | P | P | P |
| B | 9 | <2 | - | | F | P | P | P | P | P |
| C | 3 | 2.5 | Stearate | | F | P | P | P | P | P |
| D | 3 | 2.5 | - | | F | P | P | P | P | P/ |
| E | 3 | 2.5 | Titanate 1% | | | | | P | | |
| F | 3 | 2.5 | Titanate 5% | | | | | P | | |
| G | 3 | 2.5 | Titanate 10% | | | | | P | | |
| H | 2 | 5 | Stearate | | F. | F | F | P | P | P |
| I | 2 | 5 | - | | F. | P. | P | P | P | P |
| J | <2 | 7 | - | | F | F | F | P | P | P. |
| K | <1 | 15 | - | | F | F | F | F | P | P |
| L | <1 | 30 | - | | F | F | F | F | F | F |
| M | <1 | 60 | - | | F | F | F | F | B | B |
| N | <1 | 130 | - | | F | B | B | B | B | B |
| O | 25 | <1 | - | | F | P | | P | | |
| P | 15 | <1 | - | | F | F | | P | | |
| Q | 7 | 0.5 | - | | F | F | | F | | |
| R | 7 | 0.5 | Stearate | | F | F | | F | | |
| S | 7 | 1.0 | - | | F | F | | F | | |
| T | 4 | 1.4 | - | | F | F | | F | | |
| U | 3.4 | 7 | Stearate | | F | F | | F | | |
| V | <4 | 18 | - | | F | F | | F | | |
| W | 11 | <2 | - | | F | P | | P | | |
| X | 5 | <2 | - | P | P | P | | P | | P |
| Y | 30 | 15 | - | F | F | P | | P | | P |
| Z | 30 | 3 | - | | | F | | F | | F |

## Fillers

A-N   Calcium carbonate

O-V   Aluminium Trihydrate

W, X China clay

Y, Z Magnesium Hydroxide

## Mark Retention After Immersion in Skydrol to BS 2G 198

F = failed

P = passed

B = broke on expansion

MJ/MIO                    -9-

## TABLE 2

| Sample | Filler | | Flame Retardant | | EVA (%VA) | | LDPE | PE/EVA |
|---|---|---|---|---|---|---|---|---|
| | Type | PHR | Type | PHR | 40 | 13 | | |
| A | Calcium Carbonate | 150 | None | — | P | P | P | P |
| B | " | 75 | ALTH | 75 | B | P | P | P |
| C | " | 75 | " | 25 | | | | P |
| D | " | 75 | " | 50 | | | | P |
| E | " | 100 | " | 25 | | | | P |
| F | " | 100 | " | 50 | | | | P |
| G | " | 125 | " | 25 | | | | P |
| H | " | 75 | Mg(OH)₂ | 75 | F | P | P | P |
| I | " | 75 | " | 25 | | | | P |
| J | " | 75 | " | 50 | | | | |
| K | " | 75 | FRMB | 75 | P | P | P | P |
| L | " | 75) | None | — | F | P | P | P |
| | China clay | 75) | None | — | | | | |

Calcium carbonate   Surface area 9m²/g uncoated

ALTH          Surface area 25m²/g uncoated

China clay        Surface area 11m²/g uncoated

FRMB          Blythe flame retardant OE/X4195/190FR

PE/EVA         As used in Table 1

CLAIMS

1. A heat shrinkable polymeric composition characterised by an inorganic filler which provides a substrate to which a durable ink marking can be applied.

2. A composition according to claim 1, further characterised in that the filler is selected from chalks, clays, aluminium hydroxide, their hydrated forms and double salts, either alone or in admixture, and preferably the filler is calcium carbonate, aluminium silicate or other clay with a surface area of at least $1m^2/g$ up to $300m^2/g$ and most preferably having a surface area of from $1m^2/g$ to $100m^2/g$ particularly 2 to $40m^2/g$, and especially 4 to $16m^2/g$, as measured by the BET method.

3. A composition according to claim 1 or claim 2, further characterised in that the amount of filler incorporated in the composition is in the range of 5 to 60%, more preferably 10 to 50%, especially 15 to 40%, based on the weight of the composition, or the amount of filler incorporated in the composition is in the range of 15 to 60%, preferably 40 to 60%, based on the weight of the composition.

4. A composition according to any one of claims 1 to 3, further characterised in that the inorganic filler has been pre-coated with one or more coating agents such as reactive functional acid derivatives, for example, stearic acid and coupling agents such as silanes or titanates or other organo-silicon and titanium derivatives, and preferably the amount of pre-coating reagent(s) employed lies in the range of 0.1 to 15% by weight, preferably 1 to 10% by weight, based on the weight of the filler.

5. A composition according to any one of claims 1 to 4, further characterised in that the polymeric compositions comprise non-cross-linked or cross-linked thermoplastic or elastomeric substituted or unsubstituted polyakanes or alkene copolymers, such as alkene/alkene copolymers, vinyl ester homo- or copolymers and (meth)acrylate homo- or copolymers, and/or the polymer is employed as a blend system containing other polymers.

6. A composition according to any one of claims 1 to 5, further characterised in that the polymer composition also contains other additives such as organic halogen containing or inorganic flame retardants, or organo-phosphorous compounds, anti-tracking agents, high voltage erosion suppressants, stabilisers, such as antioxidents and ultra-violet stabilisers, fillers, pigments, colourants and the like.

7. A composition according to any one of claims 1 to 6, further characterised in that the polymer is substantially cross-linked such that the gel content of the cross-linked composition is at least 10%, more preferably at least 20%, for example at least 30%, or still more preferably at least 40%, and preferably the polymeric contents of the composition are cross-linked either by the incorporation of a cross-linking agent or by exposure to high energy radiation.

8. A composition according to any one of claims 1 to 7, further characterised in that it is in cross-linked form for the production of dimensionally recoverable articles.

9. A composition according to any one of claims 1 to 8, further characterised in that it is of a laminate construction where other polymeric layers with a different function to that of mark retention, for example, adhesive or highly flame retarded, are joined to the aforementioned composition.

10. A dimensionally recoverable article comprising a composition according to any one of claims 1 to 9, further characterised in that it is for use as a marking sleeve or for covering and/or sealing splices and terminations in electrical conductors or in utility systems, such as gas or water pipes, district heating systems, ventilation and heating ducts and conduits or pipes carrying domestic or industrial effluent; the composition ideally being of a flame retarding nature.